# EUROPEAN PATENT APPLICATION

(11) **EP 2 985 714 A1**
(43) Date of publication of application: **17.02.2016**
(21) Application number: 15180952.2
(22) Date of filing: 13.08.2015
(51) Int. Cl.: G06F 21/34, G06F 21/62

(54) **SECURING PERSONAL INFORMATION**

(30) Priority: 14.08.2014 US 201414460209
(71) Applicant: Nagravision S.A., 1033 Cheseaux-sur-Lausanne (CH)
(72) Inventor: STRANSKY-HEILKRON, Philippe, 1033 Cheseaux-sur-Lausanne (CH)
(74) Representative: Leman Consulting S.A.

(57) **Abstract**

A database containing personal information of a user can be selectively read from and written to by multiple entities. Access level rules determine who gets access to which entries of a user record in the database. Access to some entries and actions taken on some entries may be possible only by producing, in real time, a smartcard-based authorization for such access or actions.

## Description

### TECHNICAL FIELD

This patent document relates to secure storage of data.

### BACKGROUND

Computers and digital data storage devices are often used to process and store financial, healthcare and other personal information during and after a transaction. Personal or confidential information of a user may be stored in a database, e.g., user records at a credit agency. The stored data is made available to or can be accessed by a requesting party in many circumstances, e.g., a loan officer, during a transaction. There are various ways of obtaining a user's personal or confidential information including, e.g., having a user to submit the personal data online having a user fill out paper applications on which the user writes certain personal information such as her social security number. A user's personal information may persist beyond the use during completion of a transaction and, in some situations, such user data may be accessed by others without the user's permission or without the user knowing about the access.

### SUMMARY

Techniques are disclosed for securing personal information of a user. In some embodiments, a user's personal information is stored at a secure location, e.g., a database. Access to the personal information is controlled such that rather than directly providing a user's personal information to a requester, results of actions on the personal information, as specified by the requester, are provided to facilitate a transaction. Various access modes with varying degrees of abilities to be able to read and/or write to the personal information database may also be provided. In some embodiments, a controller permits access to the personal information only when a user's credential token, such as a smartcard, is communicatively accessible by the controller to receive an appropriate access approval.

In one example aspect, a method of controlling access to information is disclosed. The method includes receiving a request from a requester, the request identifying a user record and an action to be performed on the user record, determining whether the requester has a permission to perform the action on the user record, performing the action, when it is determined that the requester has the permission to perform the action by challenging the requester to present a hardware-based credential of an owner of the user record and communicating with the hardware-based credential to obtain the permission for taking the action on the user record.

In another example aspect, an apparatus for controlling access to personal information is disclosed. The apparatus includes a storage unit that stores personal information records for multiple users, a request reception unit that receives a request comprising a logical expression query from a requester. The evaluation of the request uses a personal information record. The apparatus further includes a request control unit that determines whether the received request conforms to a set of access rules, a request rejection unit that rejects the request when the request does not conform to the set of access rules, an evaluation unit that evaluates the logical expression query using data contained in the personal information record to produce a query result, and a response unit that responds to the request using the query result.

In yet another example aspect a system for performing a transaction using personal information of a user includes a storage unit that stores personal information records for multiple users, a hardware-based credential for each user, and a personal information controller that controls access to the personal information records stored in the storage unit, wherein, upon receiving a request from a requester to perform an action on a user record, the personal information controller determines whether the requester has a permission to perform the action to the user record, and when it is determined that the requester has the permission to perform the action, then the personal information controller challenges the requester to present the hardware-based credential and communicates with the hardware-based credential to obtain the permission for taking the action on the user record.

These and other aspects, features and their implementations are described in greater detail in the drawings, the description and the claims.

### BRIEF DESCRIPTION OF DRAWINGS

Embodiments described herein are illustrated by way of example and not limitation in the figures of the accompanying drawings, in which like reference numbers indicate similar elements and in which:
FIG. 1 is an example of a system for securing personal information of a user.
FIG. 2 is another example of a system for securing personal information of a user.
FIG. 3 is a block diagram of an example of a financial transaction system.

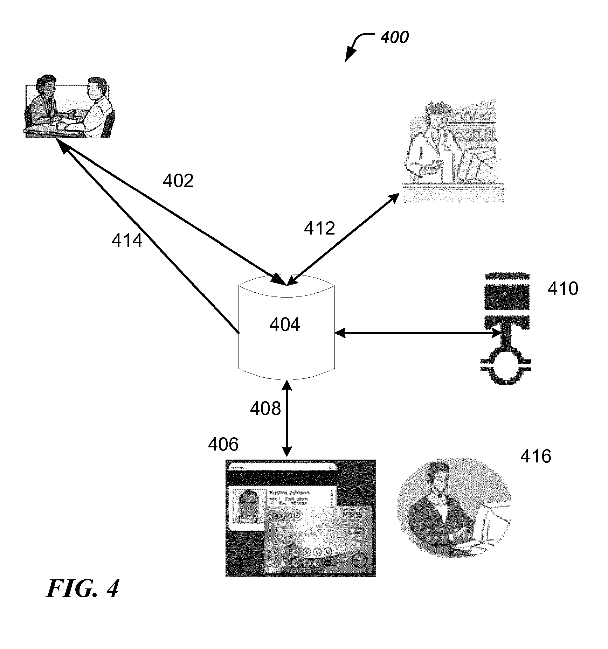

FIG. 4 is a block diagram of an example of a healthcare transaction system.
FIG. 5 is a flowchart representation of an example method of providing access to secure personal information.
FIG. 6 is a block diagram representation of an example apparatus for controlling access to secure personal information.

### DETAILED DESCRIPTION

Consumers are sometimes asked to provide personal information for gaining access to financial products or services such as loans or credit cards, or for obtaining other services such as online stream video subscriptions. For example, a loan officer may ask a consumer to fill out a loan application and provide his personal information such as annual salary, other financial obligations, social security number, etc. to make a determination of whether or not the consumer qualifies for the loan.

Another example instance in which a consumer may have to provide her personal information is when the consumer is purchasing a medication. In this case, a pharmacy may ask the consumer about personal information such as other medications she is taking or other medical conditions, e.g., allergies or ailments that she currently has. While restricting access to prescription medication can be useful in making sure that a patient does not suffer from adverse interaction while taking different medications, a medical practitioner has to depend on the patient to know what medications the patient is currently taking. Similarly, while government can monitor amount of medication purchased by an individual, this monitoring is often performed "after the fact," e.g., at the end of a year, and does not deny excessive access to the medication at the time of sale.

Many such example instances occur in real life, with the above two example being just illustrative examples. The service or product provider in such cases may not be interested in the consumer's personal information in itself, but may want access to the personal information to make an important decision based on individual user information in order to handle a particular user requested transaction, e.g., "can I approve a loan for a certain amount" or "is this drug going to cause an adverse reaction" and so on.

The personal information that the consumer gives to the service provider is, in various circumstances, provided in a paper form filled out by the consumer. Paper forms may be useful for the transaction performed at the time the forms are filled out, but any future use of this information may be inaccurate or undesired. For example, a user's health or financial conditions may change over a period of time and future use of paper forms may not reflect the accurate state of a user's then-current information. Also, paper copies may be subject to unauthorized duplications and misuse, without the consumer's knowledge.

A consumer may also provide the personal information in an electronic format via Internet or a networked terminal or computer. Such an arrangement may also suffer similar drawbacks in securing the user personal data. The electronic information may be kept in a service provider's computer systems after the transaction for which that information was obtained is consummated. Furthermore, the personal information provided by the consumer may be "too much" in the sense that some part of the provided personal data may not necessary for the particular transaction and the service provider could have made an effective decision about the transaction without certain part of the received personal information. Often, a service provider is not specifically interested in the user's personal information, but is interested in drawing a conclusion based on the personal information. For example, a loan officer doesn't necessarily have to know that a consumer's annual income is $100,000, but only needs to know whether the consumer income is above a certain threshold to qualify for a $200,000 loan (e.g., whether the consumer makes more than $60,000 annual income). Similarly, depending on the medical regulations, a pharmacy may not need to know all medications that a patient is taking, but only needs to know if medicine X that it is about to sell to the patient will have any adverse interaction for the patient. This result can be obtained without the pharmacy receiving a list of all medications a user is taking, but instead a trusted authority approved by the user and healthcare regulations receiving information about the new medication that the user wants to purchase and making a decision about whether it would be okay to provide the medication to the user.

The techniques disclosed in the present document can be used in various applications involving personal data of users or consumers to address or mitigate the above discussed limitations, and others. For example, in some embodiments of the disclosed techniques, a user's personal information may be stored in a unified managed personal information database that includes personal information records of the user. The personal information in this managed personal information database is made accessible to various service providers under certain predetermined access protocols. The access protocols are designed to provide only the necessary information for a particular transaction or service without over supply other personal information that is not essential for that transaction or service, and, in some situations, may need the user's approval during the time the information is being used by the service provider.

In one beneficial aspect, this managed database makes it possible to ensure that the latest and accurate personal information is made available to a requester when the managed database responds to a request from a service provider. This aspect of the disclosed technology avoids the disadvantage in other systems where a service provider may have to rely on the service provider's own stored personal data in their own database which may be old and outdated information. In some embodiments using the disclosed technology, instead of providing actual personal information, access may be limited to a selected part of the personal information of a user that is sufficient for a particular a result or an action performed using the personal information by a service provider. For example, a query such as "How much annual income is this user earning?" may be rejected while a query such as "Is this user making more than $80,000 annual income?" or "Does this user qualify for a $200,000 loan based on the formula that the loan amount cannot be more than twice his annual income?" may be processed upon and a result may be made available to the requester.

In some implementations of the disclosed technology, the managed database may limit the access to stored user personal information to a particular time period and will deny access after the time period expires. For example, a requester may be able to access results based on a user's personal information only in a time period during which the user is communicatively accessible to authorize the requests from a requester. This may be accomplished, e.g., by the user having in his possession a hardware token, such as a smartcard, associated with a user and communicatively coupling the hardware token with the controller of access to the user's personal information. These, and other features, are described in the present document.

Techniques disclosed in the present document could be used, e.g., to provide a public access to a user's personal or private information in the disclosed managed database. In one aspect, the access may be an algorithmic access to a certain property or characteristic, part or an aspect of the private information rather than an actual access to the entirety of the private information. For example, instead of providing access to annual salary information, access may be provided by answering an algorithm, or an expression, about the annual salary (e.g., is the annual salary at least $50,000?). In some embodiments disclosed in the present document, a query requester may formulate an expression that either implicitly or explicitly includes rules for determining the answer (e.g., "is the total monthly loan obligation less that 1/3rd of the person's monthly income?"). In some embodiments, the access rules may be provided by a third party. For example, a query expression that requests to "sell 100 tablets of medicine A" to a user may be evaluated using guidelines specified by a separate organization, e.g., American Medical Association or the Federal Drug Administration, and a corresponding answer may be provided. These, and other, aspects are further described below.

In some embodiments, the database that stores a user's personal information may be included fully or partially within the hardware token (e.g., a smartcard or a dongle). In some embodiments, a user's personal information may be stored in a database that is in a computational cloud and is accessible via a network connection such as an Internet connection. In some implementations, a smartcard may be used for storing confidential information in a secure form and a Cloud infrastructure that has various access modes may be used for transportation of the secure information among different entities to complete a transaction.

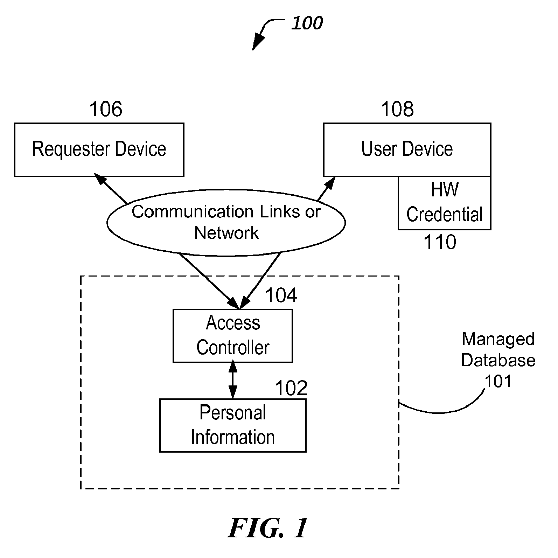

FIG. 1 depicts an example of a system 100, based on the disclosed managed database technology, for accessing a managed database 101 that stores user personal information by requester devices 106. The managed database 101 includes a personal information storage device 102 on which a user's confidential or personal information is stored. Access to the personal information in the storage device 102 may be controlled or managed by an access controller 104. In some embodiments, the storage device 102 may be a network (cloud) based database and the access controller 104 may be a server or a computer that controls or manages access to the managed database 101. As illustrated, the managed database 101 is connected to a requester device 106 and a user device 108 via communication links or a network such as the Internet or a suitable communication network. In operation, the access controller 104 of the managed database 101 is the gatekeeper for the storage device or database 102 which, in implementations, may be one or more computer storage servers.

A requester device 106 may be, e.g., a point-of-sale device such as a smartcard reader, or a financial institution's or a pharmacy's computer. When the access controller 104 of the managed database 101 receives a request to access the personal information 102 from the requester device 106, the access controller 104 may first validate the authenticity of the requester device 106, i.e., check whether the requester is indeed who the requester says it is. This may be accomplished via one of several methods including username/password based authentication, using digital certificates, hardware address identification of the requester device, and so on.

In some implementations, before providing any response to a request for personal information, the access controller 104 may first seek approval from the user whose information is being requested by communicating with the user's hardware credential 110. A user device 108 may optionally be used to facilitate communication with the hardware based credential 110. The user device 108 may be, e.g., a user's mobile phone or a computer from which the user can provide the access approval. In some cases, the requester device 106 and the user device 108 may be the same hardware platform (e.g., a point of sale smartcard reader).

In system 100, a user's personal information is stored in a network-based storage 102. Alternatively, or additionally, all or some of the personal information may be stored on a user device itself.

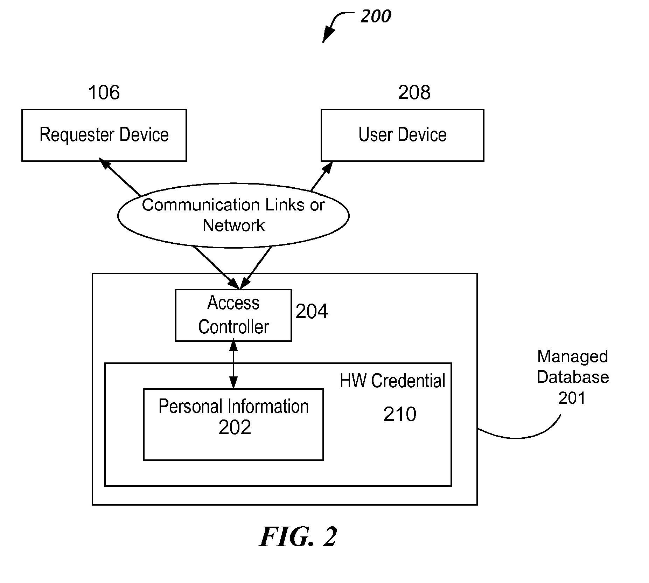

FIG. 2 depicts another example of a system 200 that implements the disclosed managed database technology by using a managed database 201 different from the managed database in FIG. 1. In comparison to system 100, the managed database 201 includes a similar access controller 204 as the interface with requester devices 106 and the gatekeeper for the user personal information 202. Different from FIG. 1, the personal information 202 (which may be similar to the personal information 102) is stored on the user's hardware credential 210 within the managed database 201. The operation of the optional user device 208 may be similar to that of the optional user device 108. In system 200, the access controller 204 may access personal information 202 stored on the hardware credential 210 via a secure facility provided by the hardware credential 210 for access to the locally stored (e.g., on-card) data.

A user's personal information 202 may be generated by inputs from multiple independent sources, including the user, a regulatory authority, a commercial entity such as a financial institution like a bank, an operator of the database in which the personal information is stored, and so on. Furthermore, the sources may not have access or visibility to each other's activity. For example, certain information added to the personal information 202 by financial institution A may not be readable by financial institution B, unless explicitly allowed by the user.

In some embodiments, a two-stage process may be used to add entries to the user's personal information. In a first stage process, a user's personal information is provided in a confidential way, e.g., by authenticating the information provider as having the access privilege to add new records to the personal information or change values of the existing records. In a second stage process, the stored information is used to get access to a product or a service, e.g., as described in the present document.

The access controller 104 (FIG. 1) or 204 (FIG. 2) may control access to the confidential information. In some embodiments, the access may be controlled via multiple access modes, with a different level of authentication used for being able to use each access mode.

One access mode may allow the creation or update of the personal record, returning a unique Personal ID (e.g., a username and a password). This could be provided via a smartcard, and by adding an authentication mechanism for later use of the smartcard (e.g., a four to six digit personal identification code).

Another access mode may allow update of the personal record by an authorized third-party (e.g., a credit rating agency or a bank or an issuer of the smartcard).

Another access mode may allow only reading of the personal record, using the smartcard as an authentication means, but not changing of any information.

In another access mode, it may be possible to query the personal record with a set of value pairs and conditions (the Expression), and receive return a value and/or a status. These rules may include comparison queries (e.g., "is value of record Y greater than 10?") or calculation queries (e.g., "is 1/3rd of value of record Z in the range 40,000 to 60,000?), and so on. The rules may also include conditions such as "medicine Q cannot be administered with medicines R, S and T. Using this condition, is it okay to give this user medicine Q?").

The system 100 in FIG. 1 or 200 in FIG. 2 can also pre-define some evaluation rules that can be used later in the Expression. These rules may be provided by an authority in a given field. For example, rules about how much amount of a particular medication can be sold to a user each month may be defined by the government. Similarly, the system 100, 200 may provide three different rules that establish a relationship between a user's monthly income and the amount of monthly loan payment he can make.

The controller that controls access to the personal information may also include a mechanism that evaluates the queries to check whether the access requests may reveal information that the requester is not authorized to receive. For example, is a requester is not authorized to be able to read a user's annual income, a query from the requester that indirectly is able to determine the user's annual income, e.g., a query such as "is 50% of the user's annual income less than $51,000 but greater than $50,900?", or a string of successive queries that are designed to obtain the exact value of the annual income, may be rejected by the mechanism as exceeding the authorization level of the requester.

To prevent successive queries to "guess" confidential information, the user and/or the creator of a particular personal information record and/or an authority such as the smartcard issuer may be able to specify an alarm condition such as a threshold that triggers an alarm to the user or the creator of the alarm based on received queries. One operational advantage of this arrangement is that the system would allow detecting if a consumer is trying to fool the system by visiting all pharmacists or financial institutions. A pharmacist or broker would be alerted that the consumer has visited many similar offices or institutions in the recent days or hours. In some implementations, an institution that creates entries in the user's personal record (e.g., a financial institution), may further provide alarm conditions and rules which, if triggered, should notify the institution. For example, when approving a loan, a financial institution may add a condition that any further credit inquiries within the next 6 months be notified to the financial institution.

In some implementations, successive queries may be thwarted by defining a time-interval based threshold. When the number of queries, possibly of a certain type, exceed the time-interval based threshold, then an alarm is issued to a designated alarm receiver. For example, one rule may specify that when a credit check is made more than 10 times in a day, then an alarm should be issued to the user and a financial institution. In some implementations, queries from unauthorized or previously unseen requesters may raise an alarm. For example, one rule may specify that when an attempt to purchase a particular medication is made at two or more pharmacies that the user had never used before is made within one week, then an alarm is raised. In some implementations, a location usage alarm rule may be specified in which temporally adjacent queries from geographically separated locations may raise an alarm. For example, when a request to access a user's financial record is made within a time (e.g., 5 minutes) of each other from two requesters that are 10's of miles away from each other, an alarm may be raised.

In some implementations, the issuer of a hardware token, such as a smartcard, may program the smartcard to generate a notification based on aging. For example, a smartcard may be replaced after 10,000 uses by the user (e.g., to prevent physical degradation and/or to renew security and robustness of the smartcard). Thus, after 9,000 (or some other threshold that leaves enough time for a user to be able to request or receive a new smartcard) requests, an alarm may be raised that it is time to renew the hardware credential.

The personal record includes, and is not limited to the user name (First Name, Last Name), Date of Birth, Nationality, Passport number, Social Security Number, voter registration number, etc. Personal record may also include information such as marital status, number of sons and daughters, past and current employers, address of employment, annual income, monthly spending and financial obligations such as house and car loans or tuition. While some personal information may not be strictly confidential (e.g., a person's height can be easily guessed by someone who sees the person), this information may still be confidential within the context in which it may be used (e.g., for establishing a person's medical insurance premium payment).

Users of the system may have different roles, and thus may have different access modes available to them. Each access mode may be associated with rights to do certain things (e.g., read or write to certain fields of personal information). Alternatively or additionally, each mode may be associated with restrictions that disallow doing certain things (e.g., modifying entries or reading entries from personal information).

In some examples, a consumer whose personal information is being secured may be given access to the creation or approval of his own personal record after someone else has created it. In some implementations, an entity, called a Super User may be given access for creation and/or updating of any consumer's personal information record.

Modification of the personal record may be a full or partial modification, depending on the access mode. For example, a consumer can update his personal information, income, etc., but not his loan payment history.

Authorization for a person to modify a record may be controlled in two ways: (1) who is authorized to make a modification and (2) what record that may be authorized to be modified and to what extent a record may be modified. This can be achieved by an access list that is associated with a personal information record. The access list may, e.g., specify who can update loan information, credit card payments, product purchased, etc. The access list may be stored along with the personal information 102, 202 or may be stored elsewhere and be accessible to the access controller 104, 204.

In some implementations, a Query-only access to the personal information may be provided to certain entities. The query may be constructed in the form of one or more values and a logical expression. For example, the query may request a specific entry in a user's personal information and the logical expression may specify how that entry is to be used, e.g., whether a comparison is desired or a "greater than" or a "less than" type action is desired, and so on.

The smartcard can hold a chip, a radio frequency identification (RFID), and may be contact or contact-less, and a display for entering additional PIN code. In some embodiments, the smartcard may have a design similar to a smartcard used in the pay-television industry (e.g., satellite, cable or terrestrial television broadcasting networks). For example, the smartcard may be designed to receive and process entitlement management messages (EMMs) or entitlement control messages (ECMs) used in the pay-television industry. The access control mentioned herein may be implemented by defining personal information records as program content and action requests from a requester as requests to view the program content.

### An illustrative financial transaction example

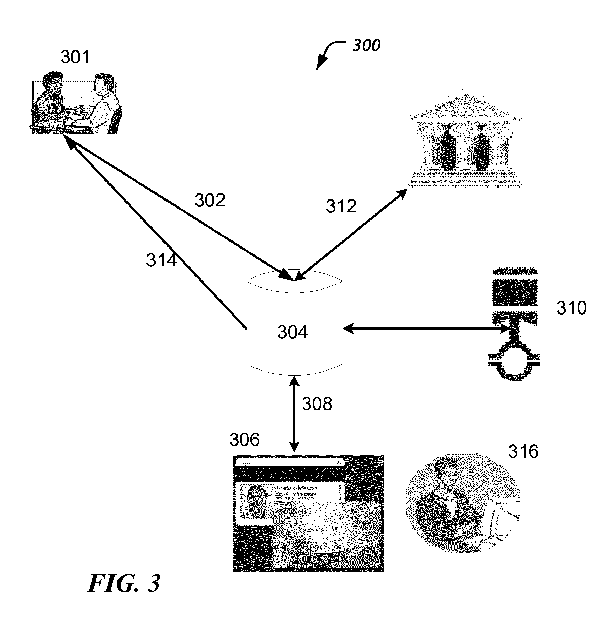

FIG. 3 depicts an example financial transaction system 300. A user goes to a financial institution (301) and requests a loan of amount A and monthly cost of C. To determine whether or not the user qualifies for the loan, in some conventional systems, the loan officer may ask the user to fill out a loan application. Once the user fills out the loan application, the loan officer may then send this application to a financial institution to receive approval. In the meantime, the loan application may be photocopied and the user's personal information may thus be available for future use to the loan officer and perhaps may be duplicable because a paper copy of the loan application may be kept on file.

While loan officers and other financial middlemen maintain privacy of a user's personal information by good business practices and building a relationship of trust, the personal information still stays on file and is vulnerable for future tampering.

In system 300, the broker may send a query 302 to the consumer's record as follows.

**Table 1 Broker Query Example**

| Broker Query |
|---|
| Value pairs : |
| LASTNAME=MUSTER |
| FIRSTNAME=ALAIN |
| Passport_nb=A102456 |
| Loan=2000 |
| Monthlyfee=150 |
| ExpDate=20151231 |

The message contains the value of the loan. This loan amount can be summed with the total loans already in the database 304 that includes the user's financial information. The message 302 may also include monthly cost of the proposed loan to the consumer. This monthly cost, or payment obligation, can be summed with the total monthly payments already in the personal database. The message also contains the rules that should be applied, or could refer to general rules already predefined and stored in the System, to evaluate whether or not the consumer can afford the loan.

Upon determination that the requester bank 301 is authorized to receive information from the database 304, an access controller (not shown in the figure) may use a logical expression evaluation engine 310 to make a decision about whether the consumer can afford the loan or not. Table 2 shows an example of consumer record information that may be used during decision making, but some of this information is not directly exposed to the requester bank 301.

**Table 2 Consumer Record**

| Consumer Record |
|---|
| Value pairs : |
| UID=98ABCD6543EF |
| LASTNAME=MUSTER |
| FIRSTNAME=ALAIN |
| SSN=123.45.6578.234 |
| Passport_nb=A102456 |
| Yearly=35000 |
| Marital=married |
| Kids=4 |
| ... |

To perform the requested action, the evaluation engine may communicate with the consumer's smartcard to receive authorization from the consumer to access the personal information. Table 3 shows an example of data stored on the consumer's smartcard, using a unique identifier (UID) of the consumer, other personal information such as name and an authentication PIN or password.

**Table 3 Consumer smartcard**

| Consumer Smartcard |
|---|
| Value pairs : |
| UID=98ABCD6543EF |
| LASTNAME=MUSTER |
| FIRSTNAME=ALAIN |
| SSN=123.45.6578.234 |
| Passport_nb=A102456 |
| Authentication=XXX |

As an example, one rule may specify that if the sum of the loans is in excess of 80% of the yearly income, or if the monthly cost is in excess of 45% of the monthly salary, then the loan is rejected. In some embodiments, the rule may be specified by the request query 302. Alternatively or additionally, the rule about how to evaluate the requested loan may also be specified by a communication with the bank 9e.g, message 312) that approves the loan. This way, the evaluation engine 310 may be able to satisfy the broker query 302, without the broker having to know the actual yearly income of the consumer.

Once the evaluation engine 310 makes a decision, a bank database may be updated accordingly, e.g., to reflect the addition of a financial obligation by the consumer. For example, a message 314 may then return "accepted" or "rejected" to the requester 301. Table 4 shows an example of the message 312 communicated to the bank for updating bank records.

**Table 4 Bank Update Database**

| Bank database |
|---|
| Value pairs : |
| LASTNAME=MUSTER |
| FIRSTNAME=ALAIN |
| Passport_nb=A102456 |
| Loan=2000 |
| Monthlyfee=150 |
| ExpDate=20151231 |

Later, when the paperwork is done, the loan and monthly payment may also be added to the personal information database 304. In some embodiments, the database 304 can contain contact information for the consumer to be able to cancel his request during a number of days.

As can be seen from the above example, the disclosed techniques can be used to facilitate financial transactions using a centralized personal information database, with different entities (e.g., a loan agency, a bank, the consumer, etc.) having different access rights, as may be specified via an access list.

### An illustrative healthcare example

Access to medications is often regulated by authorities. For example, certain medications may not be made available to purchasers without a prescription from a medical practitioner. Even when a medicine is available without prescription (e.g., an over-the - counter or OTC medicine), authorities may regulate how much of the medicine can be purchased by a user on a per-month basis.

Pharmacist updates database from an earlier treatment. For updating the database, the pharmacist accesses the database via the access controller using write access mode. Based on the access rules, explicit user permission may or may not be required for the pharmacist to be able to update the database. See Table 5 as an example.

**Table 5 Pharmacist Update**

| Pharmacist database |
|---|
| Value pairs : |
| LASTNAME=MUSTER |
| FI RSTNAM E=ALAI N |
| SSN=123.45.6578.234 |
| Medication=Librium, |
| ExpDate=20131231 |

At a later time, during the process of prescribing a particular medication to the patient, a doctor may issue a query to the database, requesting whether or not it is okay to prescribe Valium to the patient. See Table 6 for an example query.

**Table 6 Doctor Query**

| Doctor Query |
|---|
| Value pairs : |
| LASTNAME=MUSTER |
| FIRSTNAME=ALAIN |
| SSN=123.45.6578.234 |
| Medication=Valium |

The consumer's healthcare record may include personal information that could be useful in making a determination of the doctor's query. See Table 7 for an example of a relevant consumer healthcare record.

**Table 7 Consumer Healthcare Record**

| Consumer Healthcare record |
|---|
| Value pairs : |
| UID=98ABCD6543EF |
| LASTNAME=MUSTER |
| FIRSTNAME=ALAIN |
| SSN=123.45.6578.234 |
| Passport_nb=A102456 |
| BloodGroup=AB+ |
| MedicationListOfValues: |
| -Medication=Aspirin, |
| ExpDate=None |
| -Medication=Librium, |
| ExpDate=20131231 |

The consumer's smartcard may include data as shown in the example in Table 87. The holder of the smartcard may have access to all details stored on the smartcard by entering an additional PIN and reading the smartcard using a smartcard reader.

**Table 8 Consumer smartcard**

| Consumer Smartcard |
|---|
| Value pairs : |
| UID=98ABCD6543EF |
| LASTNAME=MUSTER |
| FIRSTNAME=ALAIN |
| SSN=123.45.6578.234 |
| Passport_nb=A102456 |
| Authentication=XXX |

Upon receiving the doctor's query, the evaluation engine may determine that Valium conflicts with Librium that the patient is already taking, and therefore returns a message indicating that the doctor's request is being denied. The rejection may include a further message requesting that for any additional information needed, the requesting doctor should ask the patient to present his smartcard and explicitly provide (temporary) access to the actual healthcare records for the doctor to make additional determination of which medication to prescribe.

It will be appreciated from the above example that the disclosed technique may offer operational advantages such as (a) the latest and most up-to-date information is available regarding a patient's healthcare, (b) an authorized entity (e.g., a pharmacy) is able to update the personal information, either because the entity is pre-authorized, or because a user, equipped with his smartcard and PIN, gave explicit permission to the pharmacy to make the change, (c) a healthcare provider is able to receive a decision about transaction without unnecessarily receiving personal information and (d) the healthcare provider can receive additional personal information of a user if the user provides explicit permission during the transaction.

In another example, a user's personal information may include a list of medications that the user is currently taking or is authorized to purchase.

Obviously, there is no limit in the type of data and value pairs. It can be applied to speeding tickets, purchase of good for warranty period, medication, etc.

Each data item contains the source of the data, with a reference to the entity that needs to be contacted to correct wrong data. In the meantime, the consumer can flag the data as "obsolete" or "incorrect".

Fig. 3 depicts an example of messages exchanged among various entities of a financial transaction that can be accomplished.

At 302, a broker may send a query to a loan database. Table 1 shows an example of a query that includes a list of value pairs, with each pair having a parameter field (lastname, firstname, etc.) and a corresponding entry field (Muster, Alain, etc.).

At 304, a loan database 304 has received the broker's query. Before responding to the query with the user's information, the loan database 304 may authenticate the access mode of the broker. The authentication may be based on a trusted user level of the broker. The authentication may be based on requiring that the query can be authenticated by the loan database 304 being able to access the user's smartcard 306. The loan database 304 may exchange messages 308 with the user's smartcard in which the loan database 304 may ascertain that the user information in the smartcard matches the user information provided by the broker (e.g., is the smartcard of the same user for which the broker is receiving the information).

In some embodiments, the holder of the smartcard may be asked to provide an authentication code to make the requested information available to the broker. In some embodiments, an entry may be added to the loan database and/or to the smartcard logging the request to access personal information.

When the requester is authorized, then an evaluation engine 310 may evaluate the request and provide a response using the user's personal information available to the requester. For example, the requester may query whether the user has enough credit to pay a monthly $150 payment to the broker. Upon accessing the user's personal information, as authenticated by the user's smartcard, the evaluation engine 310 may determine whether not the user has sufficient credit to make the payment. A message 312 may be sent to a bank indicating this financial obligation that the user will now be incurring, such that the bank can update its database entry for the user.

At 314, the requester receives a message in which the result of his query is provided. Based on the received information, the requester then can conduct the remaining transaction.

As can be seen from the above example, a broker is able to access a user's personal information on a limited basis, only while the user with his smartcard is also working with the broker. For example, without 308, where the loan database verifies that the broker is allowed access to the user's data based on being able to communicate with the user's smartcard, the broker will not be able to access the user's personal information.

It will be appreciated that the notion of value pair does not limit the solution to a single application. New value types can be added at will by authorized users, in the same database, or in a separate database, using the same identification smartcard. Expression and evaluation engine can process any data that is made accessible to the engine based on a set of rules. Access to confidential data is limited only to users that are authorized to do so. An individual user (a consumer) has explicit access to its data. A user may have limited rights to update data, in particular those provided by 3rd parties. A third party may specify, at the time of creation of a record, whether or not the user can modify and or access the created personal information records.

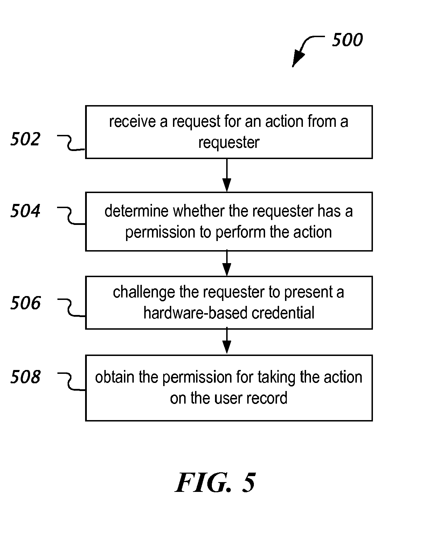

FIG. 5 is a flowchart depiction of an example of a method 500 of controlling access to information. The method may be implemented in the above-described system, e.g., as depicted in FIG. 1 or FIG. 2.

The method 500 includes, at 502, receiving a request from a requester. The request may identify a user record and an action to be performed on the user record.

The method 500 includes, at 504, determining whether the requester has a permission to perform the action on the user record.

The method 500 includes performing the action, when it is determined that the requester has the permission to perform the action as follows.

In some embodiments, the action comprises reading a value from a field of the user record and wherein the determining includes checking from an access list associated with the user record whether the field of the user record is accessible by the requester, based on the access level of the requester.

The method 500 includes, at 506, challenging the requester to present a hardware-based credential of an owner of the user record. In some embodiments, the hardware-based credential comprises a secure processor and a non-volatile memory. In some embodiments, the non-volatile memory may include a magnetic recording strip. In various embodiments, the hardware-based credential may comprise an RFID, a smartcard with a secure micro embedded onto the smart card, a universal serial bus (USB) dongle and so on.

The method 500 includes, at 508, communicating with the hardware-based credential to obtain the permission for taking the action on the user record. In some embodiments, the communicating with the hardware-based credential includes sending a passcode query and receiving a passcode response.

In some embodiments, the method 500 includes receiving an access level of the requester, wherein the access level is indicative of types of actions for which the requester is authorized.

In some embodiments, the method 500 includes taking the action on the user record after the permission is obtained; and updating a user record log with an entry indicative of the action taken. In some embodiments, the log is located on the hardware-based credential.

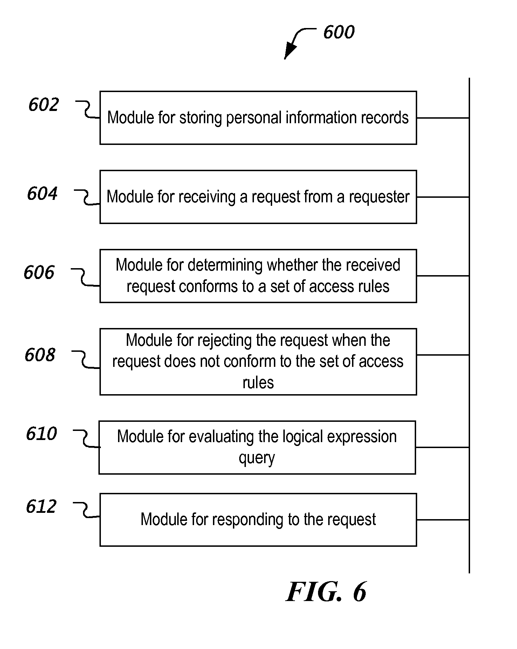

FIG. 6 is a block diagram depiction of an apparatus 600 for controlling access to personal information.

The module 602 is for storing personal information records for multiple users. For example, a storage unit such as a memory, a magnetic storage medium, a database, and so on may be used. In some embodiments, the personal information may be stored in an encrypted format. For example, digital key based encryption, and/or hashing may be used to secure the stored information.

The module 604 is for receiving a request from a requester, the request comprising a logical expression query, evaluation of which uses a personal information record. For example, a request reception unit may be used to receive the request over a communication interface.

The module 606 is for determining whether the received request conforms to a set of access rules. In some embodiments, a request control unit may be used for the determination. As previously described, the set of access rules may use, e.g., an access list. The access rules may use, e.g., identity of the requester or a password or digital certificate provided by the requester, and so on, to decide whether or not the requester is allowed to perform the requested action.

In some embodiments, the request control unit determines whether the logical expression query is a one-way function of the personal information record. A one-way function f(x) of a personal information record "x" may be sued that a value of the personal information determines an output value of the one-way function but the output value of the one-way function does not uniquely determine the value of the personal information. For example, a given output value f(x) may not uniquely determine the value of the parameter "x."

In some embodiments, the request control unit may determine the access level of the requester based on the hardware address or the location of the device from which the request is received. In some embodiments, the request control unit may determine the access level based on username/password, or a digital certification, or another technique that establishes identity of the requester.

The module 608 is for rejecting the request when the request does not conform to the set of access rules. In some embodiments, a request rejection unit may be used. The request rejection unit may, e.g., reject a query that requests an output that is not a one-way function of the personal information. In some embodiments, the request rejection unit may store a number of previous requests from a same requester to prevent a systematic "guesswork" attack by the requester based on multiple requests designed to obtain actual personal information of a user.

The module 610 is for evaluating the logical expression query using data contained in the personal information record to produce a query result. In some embodiments, an evaluation unit may be used for evaluating the logical expression query. The evaluation unit may be implemented partly or fully in hardware or software.

The module 612 is for responding to the request using the query result. In some implementations, a response unit may be used for responding and may include the ability to communicate over a network interface.

In some embodiments, the apparatus 600 further includes a record management unit that receives a record management message for changing the personal information record and a record management control unit determines whether the received record management message conforms to the set of access rules. The record management message makes a change to the personal information record when the record management control unit determines that the record management message conforms to the set of access rules. In some embodiments, the record management message includes at least one action from creating a new personal information record entry, altering an existing personal information record entry, and deleting a personal information record entry.

In some embodiments, the request rejection unit includes a temporary access unit that prompts the requester to provide additional credential when the request does not conform to the set of access rules. For example, in the previously described healthcare information, a consumer may give temporary access to a doctor to the consumer's healthcare records for the doctor to make a determination of which medication to prescribe.

In some embodiments, the rules used to control access may be updated by a rules programming unit based on new rules received from a trusted source such as a Super User, a government agency, the smartcard owner, and so on. The next time after a new rule is programmed, the rules determination unit may evaluate received request using the new rule.

In some embodiments, a system for performing a transaction (e.g., a healthcare or a financial transaction, as described in this document) using personal information of a user includes a storage unit that stores personal information record for one or more users, a hardware-based credential for each user and a personal information controller that controls access to the personal information stored in the storage unit. Upon receiving a request from a requester to perform an action on a user record, the personal information controller determines whether the requester has a permission to perform the action to the user record. When the determination indicates that the requester has the permission to perform the action, the personal information controller challenges the requester to present the hardware based credential. The presentation may be, e.g., to make the hardware-based credential available for communication with the personal information controller (e.g., by inserting a smartcard into a slot of a reader). The personal information controller then communicates with the hardware-based credential to obtain the permission for taking the action. For example, the personal information controller may prompt a user to input a PIN, to authorize the action. As another example, the personal information controller may cause a menu to be displayed such that the user becomes aware of what information is being requested for read/write operations by the action. The hardware-based credential may be a smartcard, as discussed in the present document, which includes a microprocessor and a non-volatile memory. In some embodiments, the storage unit that stores personal information record may be embedded within the hardware-based credential. For example, a smartcard that includes an on-card memory (e.g., 64 Mbytes to 2Gbytes) may be used as the hardware based credential and the on-card memory may be used to store personal information record of one or more users. The stored information may be in an encrypted form and may be decrypted only during the execution of the requested action such that the information is not made available outside the storage unit to an unauthorized requester.

In some embodiments, the hardware-based credential and the personal information controller may communicate with each other via an Internet Protocol (IP) network that may include a mix of wired and wireless technologies.

In some embodiments, the storage unit may be located on the network side (e.g., cloud-based). The personal information stored in the storage unit may be stored in a secure manner (e.g., an encrypted format) such that access to the information (e.g., for evaluating a requester's expression) is allowed only when the hardware-based credential is contemporaneously available for communication with the personal information controller. This may mean, e.g., that the requester of the information has approval of the user to perform the requested action on the user's personal information.

In some embodiments, the personal information may be stored on a storage unit that is implemented in a distributed manner - e.g., some information is stored in the cloud while some other information is stored on-card. The personal information controller in such a case will have the knowledge of how the information is distributed and can thus control access to the information accordingly.

It will be appreciated that techniques for securely storing personal information of consumers are disclosed. Access to the information is controlled by an access controller that provides multiple access modes using which requesters can perform various actions on the personal information. Some requesters are given read-only access, while other requesters may be able to both read and modify the personal information. Some requesters may not be given direct access to the personal information but may be able to provide logical expressions that can be evaluated using the personal information. These requesters, while not able to explicitly access a user's personal information, may be able to use the personal information in real world operations.

It will further be appreciated that, in some disclosed embodiments, a consumer may be in possession of a hardware-based credential such as a smartcard or an RFID or a card with a magnetic strip. Using the hardware-based credential and a password on PIN code, the consumer may be able to secure personal information stored on the credential and/or may be able to provide temporary access to the personal information during an ongoing transaction such as a financial transaction or a healthcare transaction.

The disclosed and other embodiments, modules and the functional operations described in this document (e.g., a content network interface, a look-up table, a fingerprint processor, a bundle manager, a profile manager, a content recognition module, a display controller, a user interaction module, a feedback module, a playback indication module, a program guide module, etc.) can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, which is generated to encode information for transmission to suitable receiver apparatus.

A computer program (also known as a program, software, software application, script, or code) can be written in any form of programming language, including compiled or interpreted languages, and it can be deployed in any form, including as a stand alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this patent document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

## Claims

1. A method of controlling access to information, comprising:
receiving a request from a requester, the request identifying a user record and an action to be performed on the user record;
determining whether the requester has a permission to perform the action on the user record;
performing the action, when it is determined that the requester has the permission to perform the action by:
challenging the requester to present a hardware-based credential of an owner of the user record; and
communicating with the hardware-based credential to obtain the permission for taking the action on the user record.

2. The method of claim 1, wherein the communicating with the hardware-based credential includes sending a passcode query and receiving a passcode response.

3. The method of claim 1, further including:
receiving an access level of the requester, wherein the access level is indicative of types of actions for which the requester is authorized.

4. The method of claim 1, wherein the action comprises reading a value from a field of the user record and wherein the determining includes checking from an access list associated with the user record whether the field of the user record is accessible by the requester, based on the access level of the requester.

5. The method of claim 1, further including:
taking the action on the user record after the permission is obtained; and
updating a user record log with an entry indicative of the action taken.

6. The method of claim 5, wherein the log is located on the hardware-based credential.

7. The method of claim 1, wherein the hardware-based credential comprises a secure processor and a non-volatile memory.

8. An apparatus for controlling access to personal information; comprising:
a storage unit that stores personal information records for one or more users;
a request reception unit that receives a request from a requester, the request comprising a logical expression query, evaluation of which uses a personal information record;
a request control unit that determines whether the received request conforms to a set of access rules;
a request rejection unit that rejects the request when the request does not conform to the set of access rules;
an evaluation unit that evaluates the logical expression query using data contained in the personal information record to produce a query result; and
a response unit that responds to the request using the query result.

9. The apparatus of claim 8, wherein one of the set of access rule includes an access rule based on an identity of the requester.

10. The apparatus of claim 8, wherein the request control units determines whether the logical expression query is a one-way function of the personal information record, wherein a value of the personal information determines an output value of the one-way function but the output value of the one-way function does not uniquely determine the value of the personal information and wherein the request rejection unit rejects the request when the logical expression query is not a one-way function.

11. The apparatus of claim 8, further comprising:
a record management unit that receives a record management message for changing the personal information record; and
a record management control unit determines whether the received record management message conforms to the set of access rules, wherein
the record management messages makes a change to the personal information record when the record management control unit determines that the record management message conforms to the set of access rules.

12. The apparatus of claim 11, wherein the record management message includes at least one action from creating a new personal information record entry, altering an existing personal information record entry, and deleting a personal information record entry.

13. The apparatus of claim 8, wherein the request rejection unit includes a temporary access unit that prompts the requester to provide additional credential when the request does not conform to the set of access rules.

14. The apparatus of claim 8, wherein the request control unit determines an access level of the requester.

15. The apparatus of claim 8, further including a rules programming unit that receives a new rule and modifies the evaluation unit based on the received new rule.
